Europäisches Patentamt

European Patent Office

Office européen des brevets

(19)

(11) Publication number: **0 018 413**
**B1**

(12) **EUROPEAN PATENT SPECIFICATION**

(45) Date of publication of patent specification: **16.02.83**

(21) Application number: **79900404.9**

(22) Date of filing: **10.04.79**

(86) International application number:
**PCT/JP79/00092**

(87) International publication number:
**WO 79/00923 15.11.79 Gazette 79/23**

(51) Int. Cl.³: **B 09 B 3/00, B 01 J 6/00,
H 05 B 6/80, G 21 F 9/34,
C 02 F 11/10, H 01 P 7/00**

(54) MICROWAVE MELTING DEVICE.

(30) Priority: **12.04.78 JP 43611/78
11.09.78 JP 112028/78**

(43) Date of publication of application:
**12.11.80 Bulletin 80/23**

(45) Publication of the grant of the patent:
**16.02.83 Bulletin 83/7**

(84) Designated Contracting States:
**DE FR GB**

(56) References cited:
**None**

(73) Proprietor: **NEW JAPAN RADIO CO., LTD.
17-1, Toranomon 1-chome
Minato-ku Tokyo, 105 (JP)**

(72) Inventor: **SHIBATA, Chokichiro Kawagoe Factory
New Japan Radio Co., Ltd. 1500-23, Ohaza-
Fukuoka
Kamifukuoka-shi Saitama, 356 (JP)**
Inventor: **ASAKAWA, Nobuo Kawagoe Factory
New Japan Radio Co., Ltd. 1500-23, Ohaza-
Fukuoka
Kamifukuoka-shi Saitama, 356 (JP)**
Inventor: **TAMAI, Hideaki Kawagoe Factory
New Japan Radio Co., Ltd. 1500-23, Ohaza-
Fukuoka
Kamifukuoka-shi Saitama, 356 (JP)**

(74) Representative: **Needle, Jacqueline et al,
Page, White & Farrer 27 Chancery Lane
London WC2A 1NT (GB)**

Courier Press, Leamington Spa, England

**0018413**

Microwave melting apparatus

*Field of the Invention*

This invention relates to an apparatus to melt, for subsequent solidification and disposal, wastes such as combustion ash obtained after the burning up of combustible materials, plating sludge, sewage sludge, etc. or wastes containing radioactive substances, which are in powdery, granular or lump form. More particularly, the invention relates to a microwave melting apparatus for melting combustion ash and the like by employing microwave energy most suitable for dielectric heating to utilize the dielectric property which the powdery, granular or lump material has, and by making a melting furnace to operate as a resonator.

*Description of the Prior Art*

Hitherto, for the disposal of a powdery material, a lump material or a mixture thereof, out of wastes such as combustion ash obtained at incineration plants, sewerage sludge, plating sludge, etc., there has been employed such a method as throwing away with no treatment or throwing away after the material is mixed in cement or asphalt and solidified. However, when the waste is thrown away as it is, environmental pollution is caused due to the effluence of deleterious matters, sliming by rainwater, scattering in the wind and so forth. Further, when the waste is thrown away after having been solidified by mixing in cement or asphalt, an increase in volume of the waste resulting from the mixing in cement or asphalt makes it difficult to secure a place for disposal, and cracking or the like of the waste due to its secular change gives rise to the effluence of deleterious matters, thereby causing environmental pollution, a public nuisance problem.

Especially, wastes discharged from nuclear power plant, etc., which contain radioactive substances, and plating sludge containing heavy metals are usually stored in specified storage places such as warehouses because it is not allowed to dispose of them in like manner as ordinary combustion ash even after they are burned up. Since the combustion ash of the waste containing radio-active substances is very large in volume, it is unsuitable to keep the ash in custody as it is because the storage place is limited. It is therefore desired to melt and solidify the ash before it is kept in custody.

Generally, the conventional apparatus considered for melting materials has an external heat source, i.e., heating is done by heavy oil, gas or electricity from outside the melting furnace.

However, since the combustion ash or ordinary refuse discharged from incineration plants, the combustion gas containing radioactive substances, sewerage sludge, plating sludge containing heavy metals or the like is a powder, lump or a mixture thereof, in most cases, the contact resistance of powder or granule particles is large, heat conduction to inside particles from outside particles first heated is bad, and the air existing between particles of combustion ash, etc. acts as heat insulation. Therefore, the conventional melting apparatus that heats the above material from outside is disadvantageous in that the temperature of melting furnace has to be made higher than that required, the heat efficiency is lowered, heat insulation must be large in thickness, and that the melting furnace is large in overall dimensions.

Moreover, in the conventional melting apparatus, as melting starts with the outside of material, it takes long time to melt the inside completely, and many bubbles, etc., remain in the inside.

It is known, for example, in U.S. Application No. 2648760, to use a microwave heater to heat materials, for example, for cooking foodstuffs. In known microwave heating apparatus the material to be heated is placed in a container which is then placed into the microwave cavity. Such an arrangement is not suitable for melting materials as the container would also be melted.

It is an object of this invention to provide a microwave melting apparatus arranged to efficiently melt waste material in a relatively short time.

*Disclosure of the Invention*

According to the present invention there is provided a microwave melting apparatus comprising a furnace made of a metallic tube and formed into a microwave resonator in which a material to be heated is placed, the two ends of the resonator being closed to microwaves by metallic plates, means for introducing microwaves to said furnace, and matching adjustment means for effecting electrical matching inside said furnace, characterised in that said material to be heated is a powdery, granular or lump waste material which is charged directly into said furnace, and in that a strong field is concentrated at the central portion of the furnace to heat the waste material from the inside such that the surrounding waste material forms a heat-insulating shield whereby the apparatus is arranged to melt the waste material.

The waste material is charged directly into the resonator and the field is concentrated at the central portion thereof such that the inside of the heated material is melted first by the dielectric loss heating due to internal friction of the particles themselves. There is no need to use a refractory material having a thickness larger than that required because the non-melted waste material acts as a heat-insulating shield such that the furnace itself does not attain a high temperature as is the case with conventional melting furnaces.

**0018413**

In an embodiment, more than half of the waste material is silicon dioxide. The waste is thus melted to a glass and can be cooled to form a glassy solid. Thus, combustion ash may comprise about 53% of $SiO_2$, 24.8% of $CaO$, 9.3% of $MgO$, 6.2% of $Al_2O_3$, 4.3% of $Na_2O$, and also $Fe_2O_3$, $K_2O$ etc. The combustion ash discharged from nuclear power plants may comprise, in addition to the foregoing, oxides of uranium, plutonium, etc.

*Brief Description of the Drawings*

Fig. 1 is a cross-sectional view showing the first embodiment of a microwave melting apparatus according to this invention.

Fig. 2 is an illustration of the field distribution with the microwave in a state of resonance when there is nothing put in the melting furnace of the microwave melting apparatus.

Fig. 3 is an illustration of the field distribution with the microwave in a state of resonance when a dielectric is put in the melting furnace of the microwave melting apparatus.

Fig. 4 is a cross-sectional view showing the second embodiment of the microwave melting apparatus.

Fig. 5 is a cross-sectional view showing the third embodiment of the microwave melting apparatus.

Fig. 6 is a cross-sectional view showing the fourth embodiment of the microwave melting apparatus.

*Detailed Description of the Preferred Embodiments*

In order to furnish more details of this invention, several embodiments of the invention will be described hereinbelow with reference to the accompanying drawings.

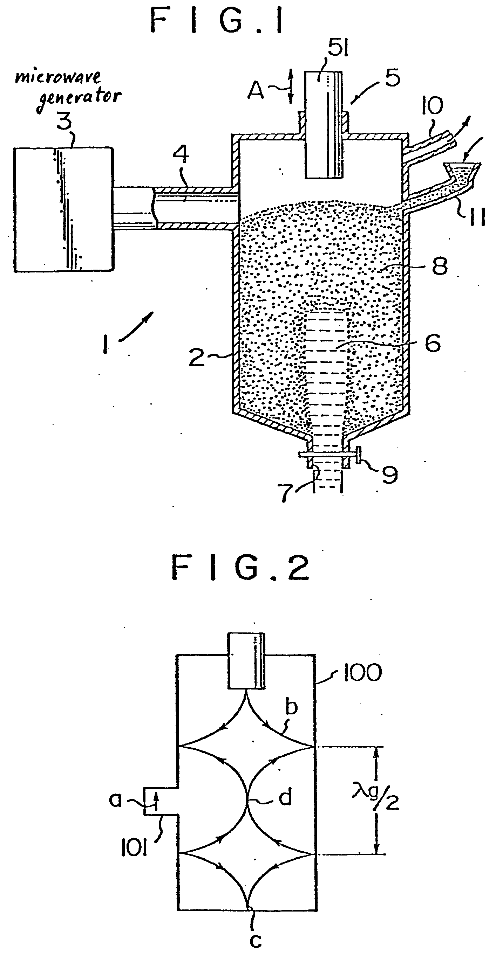

In Fig. 1, there is shown the first form in which this invention is performed.

The microwave melting apparatus 1 is made up of a melting furnace 2, a microwave generator 3, a waveguide 4, and a matching portion 5.

The melting furnace 2 is built to form a resonator for the microwave introduced from microwave generator 3 as described later. Therefore, the inner wall of melting furnace 2 is made of metal. This melting furnace 2 has matching portion 5 at its top end and outlet port 7 for molten material 6 at its bottom end. The outlet port 7 is provided with a valve 9 freely closed and opened so that molten material 6 may be taken out at any time and that the material 8 put in the melting furnace 2 may not be discharged from outlet port 7 before is it melted.

At a suitable location on the side of melting furnace 2, there is arranged the waveguide 4 for introducing microwave, the arrangement being such that the microwave generated by the microwave generator 3 connected to waveguide 4 can be introduced to melting furnace 2. Further, there is provided a gas outlet 10 for releasing the gas produced when the material 8 is melted in melting furnace 2. Still further, at a suitable location on the side of melting furnace 2, there is provided a charging port 11 to charge material 8.

As described above, the afore-mentioned matching portion 5 is provided at the top end of melting furnace 2. The matching portion comprises a matching rod 51 which can slide freely to protrude, as shown by the arrow A, into the inside of melting furnace 2 from the top end thereof by means of an external driving means (not shown).

The outlet port 7, gas outlet 10 and charging port 11 each have a diameter that provides a cut-off wave-length.

Generally, the field distribution in a resonator is such that, as shown in Fig. 2, for example, when a microwave of $TE_{10}$ mode having a field as shown by the arrow a is introduced from wavelength 101 and is made to resonate in the TM mode as shown by electric lines of force b shown in Fig. 2, the field strength is the largest at point c on the lower end of resonator and at point d where the electric lines of force concentrate. In this case, the distance between the points of the largest field strength is $\lambda g/2$ ($\lambda g$: wave-length in waveguide).

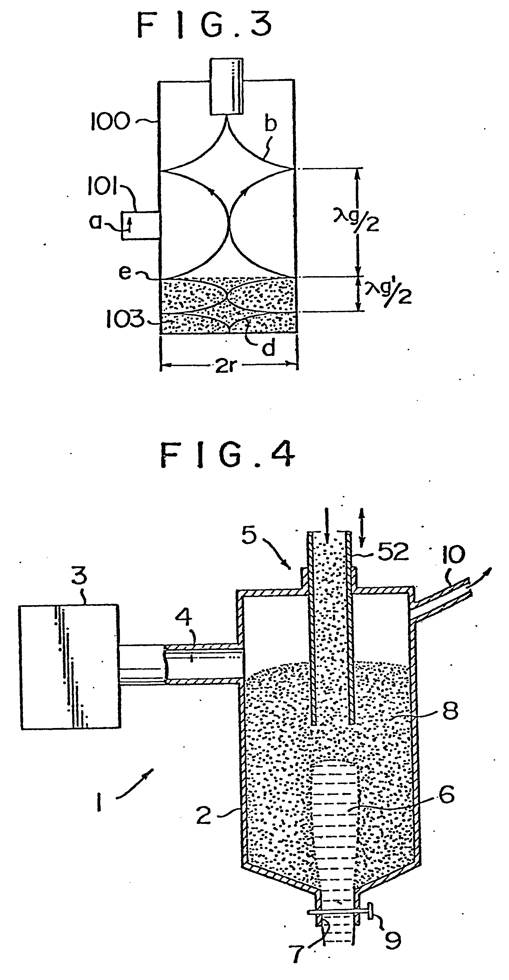

When a dielectric having a specific inductive capacity $\varepsilon_s$ is charged into this resonator 100, the electric lines of force showing the field distribution as shown in Fig. 3 change in the dielectric as shown by d. Assuming that the wave-length is $\lambda$, light velocity C and frequency f, these have the following relation:

$$\lambda = \frac{C}{f}$$

By determining the halfwave length in waveguide $\lambda'g/2$ when the dielectric having a specific inductive capacity $\varepsilon_s$ is charged into resonator 100, the following relation is obtained:

3

$$\lambda'g = \frac{\dfrac{1}{\sqrt{\varepsilon_s}}\lambda}{\sqrt{1-\left(\dfrac{1}{\lambda c}\cdot\dfrac{\lambda}{\sqrt{\varepsilon_s}}\right)^2}}$$

where $\lambda c$ = cut-off wave length

$$\lambda c = \frac{2\pi r}{\rho nm} \quad (\rho nm: \text{root of Bessel function})$$

Since $\varepsilon_s$ is equal to 1 when the dielectric is not charged the wave-length in waveguide $\lambda g$ is determined by the formula:

$$\lambda g = \frac{\lambda}{\sqrt{1-\left(\dfrac{\lambda}{\lambda c}\right)^2}}$$

For further explanation, the case in which the frequency f is equal to 2450 MHz will be taken as an example. The diameter of resonator 100 must be larger than the cut-off wave-length in order to transmit radio wave. The then threshold radius rc is given by:

$$rc = \frac{\rho nm}{2\pi}\lambda$$

The wave-length $\lambda$ when f is equal to 2450 MHz is 12.24 cm. Hence,

$$rc = \frac{\rho nm}{2\pi} \times 12.24$$

The values of $\rho nm/2\pi$ and of rc are as shown in the following table according to the transmission mode.

| Transmission Mode | $TE_{11}$ | $TM_{01}$ | $TE_{21}$ |
|---|---|---|---|
| $\dfrac{\rho nm}{2\pi}$ | $\dfrac{1}{3.413}$ | $\dfrac{1}{2.61}$ | $\dfrac{1}{2.057}$ |
| rc (cm) | $\dfrac{7.18}{2}$ | $\dfrac{9.38}{2}$ | $\dfrac{11.9}{2}$ |

Therefore, the diameter of the resonator must be more than 7.18 cm for $TE_{11}$ mode, more than 9.38 cm for $TM_{01}$ mode and more than 11.9 cm for $TE_{21}$ mode. It is desirable to have a dimension that provides a cut-off wave-length for $TE_{21}$ mode in order to cause resonance in $TM_{01}n$ mode. Hence, the diameter of the resonator must be more than 9.38 cm and less than 11.9 cm.
Taking the diameter of resonator 100, 2r, equal to 10.6 cm,

$$\lambda c = \frac{2\pi}{\rho nm} r = 2.61 \times 5.3 \text{ (cm)} \quad (TM_{01} \text{ mode})$$

Taking the specific inductive capacity of combustion ash, $\varepsilon_s$, equal to 2.2,

$$\lambda'g \doteqdot 10.3 \text{ cm}$$

4

As $\varepsilon_s$ is equal to 1 when the material is not charged, $\lambda g$ is taken equal to 26.3 cm.

Thus, in the microwave melting apparatus 1 shown in Fig. 1, the material 8 having a specific inductive capacity $\varepsilon_s$ is charged, microwave is introduced, and the field distribution varying with the amount of material 8 is adjusted by matching portion 5 so that the point of strong field in melting furnace 2 is in the vicinity of outlet port 7.

The gas produced with the start of melting is released from gas outlet 10.

In Fig. 4, there is shown the second form in which this invention is performed.

In this second form, there is provided a matching tube 52 which is formed by making tubular the inside of matching rod 51 of matching portion 5 formed as shown in Fig. 1. This permits to charge material 8 without providing the charging port 11 shown in Fig. 1.

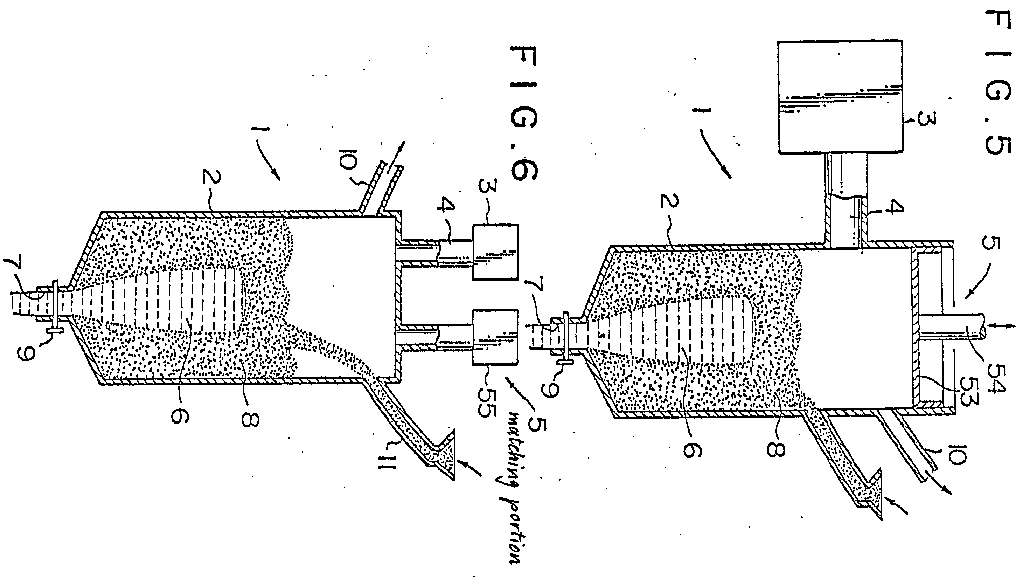

In Fig. 5, there is shown the third form in which this invention is performed.

In this third form, the matching portion 5 does not use the matching rod 51 shown in Fig. 1 but is formed so that the top end 53 of melting furnace moves vertically by an external driving means.

Such utilization of the top end also permits to make matching adjustment.

Further, in Fig. 6, there is shown the fourth form in which this invention is performed.

In this fourth form, there are provided a charging port 11 to charge material 8 into melting furnace 2 and a gas outlet 10 to release the gas produced in melting furnace 2. Further, at the top end of melting furnace 2, there are provided a waveguide 4 to one end of which a microwave generator 3 is connected, and a matching portion 5 which serves to cause the microwave to resonate completely. Any of the afore-mentioned types of matching portion 5 may be used. In Fig. 6, there is provided a matching circuit 55 to give variable impedance by means of an electric circuit.

*Industrial Applicability*

This invention can be employed in a disposal process in which it is necessary to have wastes, which cause a public nuisance problem, kept in custody at a specified place. The invention is particularly suitable for the refuse disposal at nuclear power plants which will increase in number in the future.

**Claims**

1. A microwave melting apparatus (1) comprising a furnace (2) made of a metallic tube and forming into a microwave resonator (100) in which a material (8) to be heated is placed, the two ends of the resonator being closed to microwaves by metallic plates, means (4, 101) for introducing microwaves to said furnace (2), and matching adjustment means (5) for effecting electrical matching inside said furnace, characterised in that said material (8) to be heated is a powdery, granular or lump waste material which is charged (by 11 or 52), directly into said furnace (2), and in that a strong field is concentrated at the central portion of the furnace (2) to heat the waste material from the inside such that the surrounding waste material forms a heat-insulating shield whereby the apparatus is arranged to melt the waste material (6).

2. Apparatus according to Claim 1, characterised in that more than half of said waste material (8, 6) is silicon dioxide.

3. Apparatus according to Claim 1 or 2, characterised in that said waste material (8, 6) is combustion ash, plating sludge or sewerage sludge.

4. Apparatus according to any preceding Claim, characterised in that said waste material (8, 6) contains radioactive substance.

**Revendications**

1. Appareil de fusion à micro-ondes (1) comportant un four (2) fait d'un tube métallique et réalisé sous la forme d'un résonateur à micro-ondes (100) dans lequel on place une matière (8) à chauffer, les deux extrémités du résonateur étant fermées aux micro-ondes par des plaques métalliques, des moyens (4, 101) d'introduction de micro-ondes dans ledit four (2), et des moyens d'ajustement d'adaptation (5) pour assurer une adaptation électrique à l'intérieur dudit four, caractérisé en ce que ladite matière (8) à chauffer est une matière de rebut pulvérulente, granulaire ou en morceaux qui est chargée (par 11 ou 52) directement dans ledit four (2), et en ce qu'un champ intense est concentré dans la partie centrale du four (2) pour chauffer la matière de rebut à partir de l'intérieur de façon que la matière de rebut environnante forme un bouclier d'isolation thermique moyennant quoi l'appareil est aménagé pour fondre la matière de rebut (6).

2. Appareil selon la revendication 1, caractérisé en ce que plus de la moitié de ladite matière de rebut (8, 6) est du dioxyde de silicium.

3. Appareil selon la revendication 1 ou 2, caractérisé en ce que ladite matière de rebut (8, 6) est de la cendre de combustion, de la boue d'électroplastie ou de la boue d'eau d'égout.

4. Appareil selon l'une quelconque des revendications précédentes, caractérisé en ce que ladite matière de rebut (8, 6) contient de la subtance radioactive.

**0018413**

### Patentansprüche

1. Mikrowellen-Schmelzvorrichtung (1) mit einem Schmelzofen (2), der aus einem Metallrohr hergestellt und zu einem Mikrowellen-Resonator (100) geformt ist, in den ein zu erhitzendes Material bzw. Gut (8) einbringbar ist, wobei die beiden Enden des Resonators durch Metallplatten für Mikrowellen abgeschlossen sind, mit einer Einrichtung (4, 101) zum Einführen von Mikrowellen in den Schmelzofen (2) und mit einer Anpassungs-Abgleicheinrichtung (5) zur Durchführung einer elektrischen Anpassung im Inneren des Schmelzofens, dadurch gekennzeichnet, daß das zu erhitzende Gut (8) ein pulverförmiges, körniges oder klumpiges Abfallmaterial ist, das (durch 11 oder 52) unmittelbar in den Schmelzofen (2) einbringbar ist, und daß im Mittelteil des Schmelzofens (2) ein starkes Feld zur Erhitzung des Abfallmaterials von innen her konzentriert ist, derart, daß das umgebende Abfallmaterial eine wärmeisolierende Abschirmung bildet, wobei die Schmelzvorrichtung das Abfallmaterial (6) zu schmelzen vermag.

2. Schmelzvorrichtung nach Anspruch 1, dadurch gekennzeichnet, daß mehr als die Hälfte des Abfallmaterials (8, 6) aus Siliziumdioxid besteht.

3. Schmelzvorrichtung nach Anspruch 1 oder 2, dadurch gekennzeichnet, daß das Abfallmaterial (8, 6) Verbrennungsasche, Galvanikschlamm oder Klärschlamm ist.

4. Vorrichtung nach den vorangehenden Ansprüchen, dadurch gekennzeichnet, daß das Abfallmaterial (8, 6) radioaktive Stoffe enthält.

# F I G . I

microwave generator

3

51

5

A

10

4

8

6

2

11

1

7

9

# F I G . 2

100

b

a

d

$\lambda g/2$

101

c

1

# FIG.3

# FIG.4

0018413

F I G . 5

F I G . 6

matching portion